# EUROPEAN PATENT APPLICATION

(11) **EP 3 062 312 A1**
(43) Date of publication of application: **31.08.2016**
(21) Application number: 13896080.2
(22) Date of filing: 21.10.2013
(51) Int. Cl.: G21C 5/18, G21C 5/00

(54) **NUCLEAR REACTOR CORE**

(71) Applicant: Hitachi, Ltd., Chiyoda-ku Tokyo 100-8280 (JP)
(72) Inventor: MITSUYASU, Takeshi, Tokyo 100-8280 (JP); AOYAMA, Motoo, Tokyo 100-8280 (JP)
(74) Representative: MERH-IP Matias Erny Reichl Hoffmann Patentanwälte PartG mbB
(86) International application number: PCT/JP2013/078411
(87) International publication number: WO 2015/059737

(57) **Abstract**

The initial-core economical efficiency is improved by loading the medium enriched fuel in the peripheral or lacing it adjacent to the low enriched fuel and the highly enriched fuel. According to the present invention, in an initial core of a Boiling Water Reactor loaded with at least three types of fuel including highly enriched fuel with a fission-material content of 3.0wt% or more, medium enriched fuel with a fission-material content of a range from 1.5wt% or more to less than 3.0wt%, and low enriched fuel with a fission-material content of less than 1.5wt%, when a region of an outermost peripheral of a core occupied by the fuel having no face adjoining another fuel in a horizontal direction is defined as an outermost peripheral region, a region outside a line at 80% of a radius of a circumcircle of the core and except for the outermost peripheral region is defined as a peripheral region and the remainder is defined as an inner region, 50% or more of the fuel loaded in the peripheral region is the medium enriched fuel.

## Description

### Technical Field

The present invention relates to a nuclear reactor core.

### Background Art

A Boiling Water Reactor contains a plurality of fuel assemblies loaded into a core of a reactor pressure vessel. The fuel assemblies each have a plurality of fuel rods each filled with a plurality of fuel pellets made of nuclear fuel materials including uranium, a lower tie plate supporting the lower ends of the fuel rods, an upper tie plate supporting the upper ends of the fuel rods, and a channel box which is a square cylinder mounted to the upper tie plate to extend toward the lower tie plate. The plurality of fuel rods, which are bundled together with fuel spacers for maintaining an interval between fuel rods at a predetermined distance, is placed within the channel box.

A core installed in a reactor pressure vessel of a newly built Boiling Water Reactor is called an initial core. All the fuel assemblies loaded in the initial core are fresh fuel assemblies with exposure of zero GWd/t. In the Boiling Water Reactor having the initial core, a part of the fuel assemblies in the initial core is removed and replaced with fresh fuel assemblies after the completion of the first cycle of operation. A plurality of the fuel assemblies removed from the core after the completion of the first cycle of operation has a lower enrichment at the time of being loaded into the initial core than an average enrichment of all the fuel assemblies loaded into the initial core.

The Boiling Water Reactor with the initial core must also be operated continuously over a span of a single operation cycle (e.g., one year) without replenishment with fuel assemblies, so that the initial core contains a larger amount of fission materials than necessary to maintain criticality. This results in the initial core with excess reactivity, and therefore, to control the excess reactivity, the Boiling Water Reactor has a plurality of control rods and also burnable poison is mixed into the nuclear fuel materials in the nuclear fuel rods included in the fuel assemblies loaded into the initial core.

An example of such initial cores is described in JP-A No. 2008-145359. In the initial core described in JP-A No. 2008-145359, the amount of fission materials in a plurality of the fuel assemblies located around the perimeter region is larger than that in the fuel assemblies located in a region inside the perimeter portion. In the region inside the peripheral portion, a plurality of control cells having four fuel assemblies with a low average enrichment is located and a control rod for adjusting the power output of the nuclear reactor core is inserted among the four fuel assemblies making up part of a control cell.

JP-B No. H06-044055 also describes an initial core. The initial core is loaded with fuel assemblies having a plurality of types of uranium enrichments as fuel. The plurality of fuels is used to flatten the core power distribution for the improved an economical efficiency of the plant.

The initial core described in JP-A No. S59-015888 is loaded with highly enriched fuel of a high uranium enrichment placed in the outermost peripheral of the core. The power peaking in the radial direction of the core is flattened by increasing the fuel power on the outermost peripheral where the power output is low.

### Citation List

### Patent Document

Patent Document 1: JP-A No. 2008-145359
Patent Document 2: JP-B No. H06-044055
Patent Document 3: JP-A No. S59-015888

### Summary of the Invention

### Technical Problem to be solved by the Invention

With the initial core described in JP-B No. H06-044055, in the core containing a plurality of types of fuels of different enrichments, the method is adopted of placing, in the outermost layer, the fuel of an approximately medium enrichment at which the neutron multiplication factor reaches maximum among the fuels at an exposure of zero GWd/t. This results in an increase in the leakage of neutrons in the core, degrading the economical efficiency.

In the initial core described in JP-A No. S59-015888, to improve the fuel economical efficiency, the high enriched fuel, which is not unloaded during the first to the third cycle, is placed in the outermost peripheral in the first cycle. This causes the power distribution to be flattened, but the leakage of neutrons is increased as in the case of the JP-B No. H06-044055.

It is an object of the present invention to improve the economical efficiency of the initial core.

### Solution to the Problem

According to the present invention, when a region of an outermost peripheral of a core occupied by fuel having no face adjoining another fuel in a horizontal direction is defined as an outermost peripheral region, a region outside a line at 80% of a radius of a circumcircle of the core and except the outermost peripheral region is defined as a peripheral region and the remainder is defined as an inner region, 50% or more of the fuel loaded in the peripheral region is the medium enriched fuel.

### Advantageous Effects of the Invention

According to the present invention, an improvement in an economical efficiency of an initial core can be achieved.

### Brief Description of the Drawings

Fig. 1 is a fuel loading pattern in a nuclear reactor core according to a preferable embodiment of the present invention.
Fig. 2 is a block diagram of a boiling water reactor having the initial core illustrated in Fig. 1.
Fig. 3 is a block diagram of a fuel assembly loaded into the initial core illustrated in Fig. 1.
Fig. 4 is a cross sectional view of the four fuel assemblies placed around a neutron detector in the initial core illustrated in Fig. 1.
Fig. 5 is a top view of the four fuel assemblies placed in a cell of the initial core illustrated in Fig. 1.
Fig. 6 shows an example of infinite neutron multiplication factors versus exposure of the initial core fuel.
Fig. 7 shows an example of power versus distance from the core center.
Fig. 8 is a typical fuel loading pattern of an equilibrium core.
Fig. 9 is an explanatory diagram illustrating faces adjoining control cells.
Fig. 10 is an explanatory diagram illustrating an outermost core region, a peripheral core region and an inner core region.
Fig. 11 is a cross sectional view of an initial core of the nuclear reactor according to Embodiment 2 which is another embodiment of the present invention.
Fig. 12 is a cross sectional view of an initial core of the nuclear reactor according to Embodiments 3 and 4 which are other embodiments of the present invention.

### Description of the Embodiments

The present invention relates to an initial core of a nuclear reactor, and more particular, to an initial core of a nuclear reactor suitable for use for a Boiling Water Reactor.

The studies conducted thoroughly and widely by the inventors showed new configuration effecting an improvement in an economical efficiency of an initial core. The results of the studies and a newly found initial core will be described below in outline form.

Using fuels containing different percentages of fission materials (hereinafter referred to as "enrichments") is a common way to improve an econoimcal efficiency of an initial core of a Boiling Water Reactor as described in Background Art. The reason will be described below. Here, assuming that the period during which the replacement of fuel is repeated several times after the operation has been started at the initial core corresponds to a transition core, and a state of obtaining an approximately uniform fuel loading pattern after repetition of the fuel replacements in the transition core corresponds to equilibrium core. At this stage, the equilibrium core offers the greatest economic advantages. Fuels are loaded into the aforementioned initial core using different enrichments with simulation of equilibrium core in mind in order to bring the initial core as close to the equilibrium core as possible. For each fuel, in order to simulate the fuel having been burned in the equilibrium core, a plurality of different enrichments are used. For example, a fuel corresponding to the burned fuel is simulated by lowering the enrichment. Since a fuel having an enrichment of 3wt% or more is typically used for the reloaded fuel in the nuclear reactor, a fuel having an enrichment of 3wt% or more is defined as high enriched fuel. A fuel containing one half or more of the percentage of the fission materials contained in the highly enriched fuel, that is, a fuel having an enrichment of 1.5wt% or more but not belonging to highly enriched fuel is defined as medium enriched fuel. A fuel which does not belong to the highly enriched fuel and the medium enriched fuel is defined as low enriched fuel.

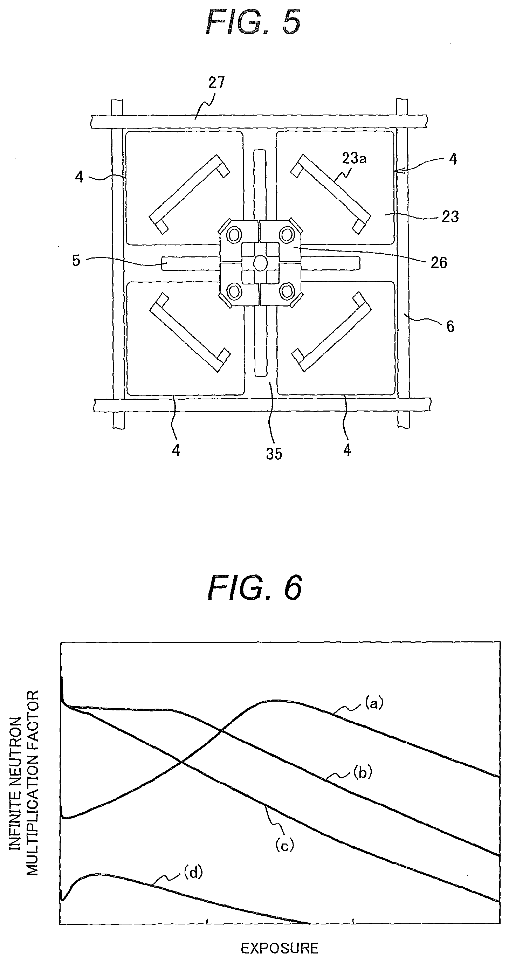

Fig. 6 shows the relationship between the exposure of each fuel and the infinite neutron multiplication factor (hereinafter referred to as "multiplication factor"). Line (a) shows the highly enriched fuel having an enrichment of about 3.8wt%, which includes burnable poison and is equivalent to the reloaded fuel of the equilibrium core. Line (b) shows the medium enriched fuel A having an enrichment of about 2.5wt%, which includes burnable poison. Line (c) shows the medium enriched fuel B having an enrichment of 1.8wt% without burnable poison. Line (d) shows natural uranium fuel (low enriched fuel) without burnable poison. The fuel (b) and/or the like is used for the initial loading fuel to simulate the characteristics of the fuel (a) after burning, but the gradient of the fuel (a) after burning differs slightly from the gradient of the fuel (b). This results from the differences in neutron energy spectrum (hereinafter referred to as "spectrum") due to differences in enrichments, and the differences in fuel characteristics because the initial loading uranium fuel does not contain plutonium in the fuel, but the fuel after burning contains plutonium. For this reason, from the viewpoint of sustaining criticality until the end stage of core operation and the viewpoint of transitioning to the equilibrium core as early as possible while ensuring the criticality in the transition core from the second cycle on as well, the infinite multiplication factor is set equal to or higher than that for the fuel after burning in the simulation during the first cycle. However, if the enrichment is increased for a higher multiplication factor, the multiplication factor becomes too high in the beginnings of burning. To avoid this, burnable poison is added to some fuels (for example, fuel (b)) in which the multiplication factor becomes too high in order to reduce the multiplication factor in the beginnings, effecting a change in multiplication factor as shown. In this respect, in the beginnings of the first cycle of the initial core, the relationship of the multiplication factor is as follows: the medium enriched fuel A(b) ≥the medium enriched fuel B(C)>the highly enriched fuel (a) >the low enriched fuel (d). In contrast, assuming that each fuel is burned at the same exposure, the relationship of the multiplication factor in the end stage of the first cycle is as follows: the highly enriched fuel (a)>the medium enriched fuel A(b)>the medium enriched fuel B(c)>the low enriched fuel (d). In the medium enriched fuel A, the multiplication factor is high throughout the operation period. To flatten the core power for an improvement in thermal margin, the power sharing in the interior of the core can be reduced by increasing the power in the peripheral portion of the core.

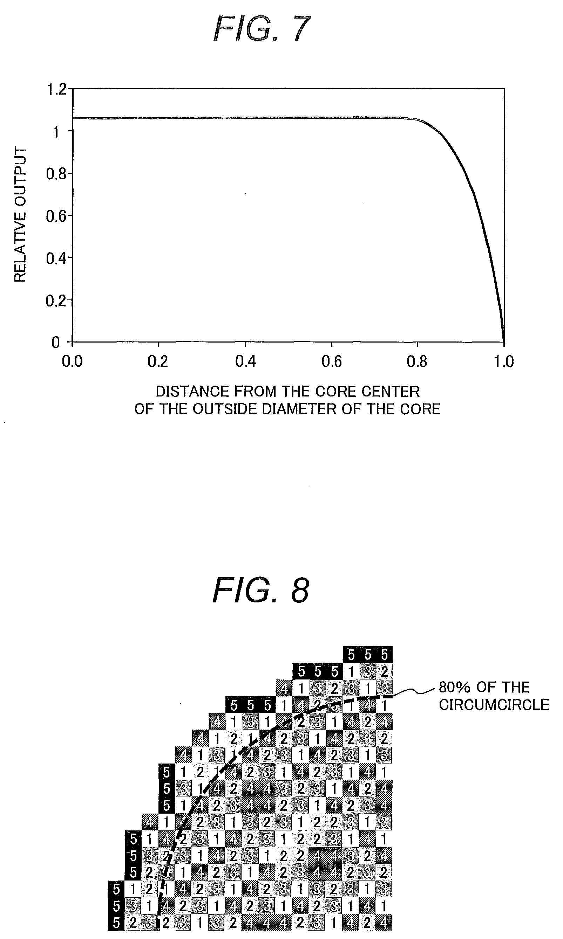

Fig. 7 shows a typical power-output distribution in relation to the distance from the center of the core. If the flattening is achieved in the interior of the core, the magnitude of the relative power-output depends on how much the power output reduces in the peripheral portion of the core. In the peripheral portion of the core where the power starts to reduce, the power starts to reduce from the 80% position from the core center along the outside diameter of the core according to Fig. 7. Therefore, the inventors have had an idea that fuels of as high multiplication factor as possible are located in the region throughout the period of operation. In this case, the fuel corresponds to the medium enriched fuel A.

Next, the inventors thought of a decrease of the number of reloaded fuel assemblies to improve the economical efficiency of the core. Decreasing the number of reloaded fuel assemblies equivalently means increasing the exposure relative to the enrichment of the unloaded fuel. In a typical initial core, a fuel of a lowest enrichment is unloaded after the first cycle operation. The low-enrichment fuel generates a low power on a standalone basis, and also is placed in a location where the power output easily decreases such as the outermost periphery and/or the like in the core, so that the fuel is rarely burned. As a result, the exposure relative to the enrichment is lowered. This is one of the factors of degrading the economical efficiency of the initial core. To address this, the low enriched fuel is located next to a fuel with a high multiplication factor. When consideration is given to the operation period in its entire, because as the low enriched fuel is burned, the multiplication factor decreases, the use of highly enriched fuel in which the multiplication factor increases because of the addition of burnable poison as the fuel is burned is desired in terms of reducing the change in excess reactivity in the core. The highly enriched fuel generates larger power in the core because the multiplication factor becomes greatest among the fuels in the end stage of operation. It is desired to place the highly enriched fuel next to a fuel of a low multiplication factor in terms of flattening of the power distribution. Hence, the highly enriched fuel and the low enriched fuel are placed as adjacent to each other as possible in order to achieve the above two advantageous effects.

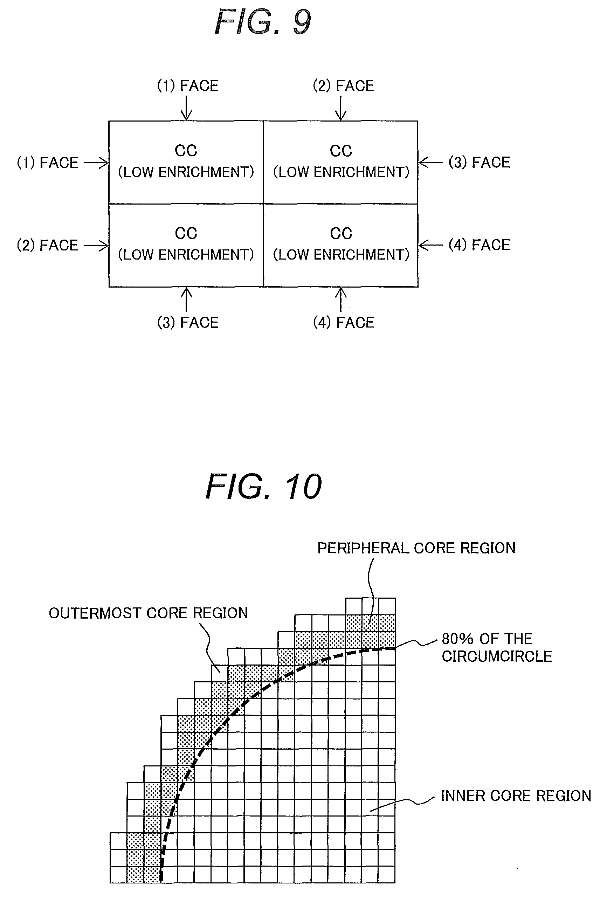

Fig. 8 shows a typical fuel loading pattern of the equilibrium core. When a combination of the high, medium and low enriched fuels is used to make a fuel loading pattern to simulate the equilibrium core, the fuels are arranged in alternate position such as in the loading pattern shown in Fig. 8. In the initial core, the number of low enriched fuel placed around the highly enriched fuel is two, while the number of highly enriched fuel placed around the low enriched fuel is two. Further, in a typical Boiling Water Reactor, four low-power fuel assemblies are loaded around a control rod, which are called a control cell (hereinafter referred to as "CC") as a region for control rod operation during operation. In the initial core, the low enriched fuel is used as a low-power fuel. Two fuel assemblies around the low enriched fuel in the CC certainly are the low enriched fuel, so that the loading pattern is subject to the limitation that the highly enriched fuel is placed around the CC in order to achieve the aforementioned arrangement of the highly enriched fuel being placed around low enriched fuel. However, in the CC the highly enriched fuel supplies neutrons to the low enriched fuel, but the control rod absorbs the neutrons, resulting in less effect of burning. In contrast, in the fuel loading pattern in a staggered arrangement, placing the highly enriched fuel away from the cc position results in placing, in the peripheral portion, the fuel which are not able to be loaded into the inner portion of the core. To address this, the inventors contemplated applying the fuel loading pattern in a staggered arrangement to the area around the CC as in other areas. Specifically, the four low enriched fuel assemblies within the cc have 8 side faces adjacent to other fuels, and when the fuel is placed opposite the respective 8 side faces in a staggered arrangement, this can be represented as shown in Fig. 9. The faces indicated with the same number in Fig. 9 are shown as adjoining the fuels of the same type. In the core loaded with three types or more of the fuel, at least two of the 8 faces are adjacent to the highly enriched fuel. This shows that the number of faces of the low enriched fuel in the CC position adjoining the highly enriched fuel averages at least 0.5. Further, regarding the fuel contained in the CC, it is seen from Fig. 9 that the ratio of the number of fuel assemblies in the CC position and other positions stands approximately at 1:2. Namely, the number of adjacent faces of the low enriched fuel adjoining the highly enriched fuel in the initial core averages 1.5 or more. Likewise, the number of low enriched fuel adjacent to the highly enriched fuel when the fuel is placed in a staggered arrangement averages 2. To avoid the placement of the highly enriched fuel to the peripheral portion of the core, an approximately equal number of highly enriched fuel and the low enriched fuel is loaded into the inner portion of the core. As a result, in the CC made as described above, the four highly enriched fuel assemblies per CC equal in number of fuel are loaded in a pattern different from the staggered pattern. When the at least two faces of the low enriched fuel in the CC face the highly enriched fuel, the at least two faces of the highly enriched fuel face to the low enriched fuel from the viewpoint of the high enriched fuel. That is, as in the case of the low enriched fuel, the number of adjacent faces of the highly enriched fuel adjoining the low enriched fuel averages 1.5 or more. Embodiments according to the present invention, reflecting the results of the above studies, will be described below.

### Embodiment 1

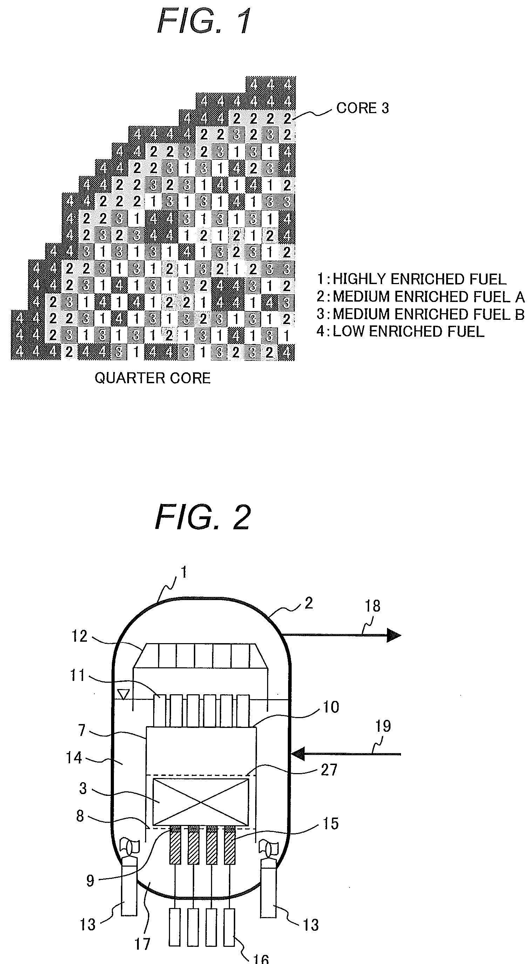

An initial core of a nuclear reactor of Embodiment 1 according to a preferred embodiment of the present invention is described with reference to Fig. 1.

First, schematic structure of a Boiling Water Reactor suitably using the initial core according to the embodiment is described with reference to Fig. 1 and Fig. 2. The Boiling Water Reactor 1 is equipped with a core 3 which is an initial core contained in a reactor pressure vessel 2. The core 3 is surrounded by a cylinder-shaped core shroud 7 placed inside the reactor pressure vessel 2. A shroud head 10 covering the core 3 is mounted on the top end of the core shroud 7. A steam separator 11 is mounted to the shroud head 10 to extend upward. A steam dryer 12 is placed above the steam separator 11. The shroud head 10, the steam separator 11 and the steam dryer 12 are placed within the reactor pressure vessel 2.

An upper grid plate 27 is placed below the shroud head 7 within the core shroud 7, and is attached to the core shroud 7 to be situated on the top end of the core 3. A core support plate 8 is placed within the core shroud 7 to be situated at the bottom end of the core 3 and installed to the core shroud 7. A plurality of internal pumps 13 are mounted to the bottom of the reactor pressure vessel 2, and an impeller of each of the internal pumps 13 is placed in a ring-shaped downcomer 14 formed between the core shroud 7 and the reactor pressure vessel 2. A plurality of fuel support fittings 9 are mounted to a core support plate 8. A plurality of control-rod guide tubes 15 are placed under the core support plate 8 within the reactor pressure vessel 2. The control rods 5 of cruciform cross-section are placed respectively in the control-rod guide tubes 15. The control rods 5 are connected to a control-rod drive mechanism 16 installed in a control-rod drive mechanism hosing (not shown) mounted to the bottom of the reactor pressure vessel 2.

A plurality of fuel assemblies 4 (for example, 872 fuel assemblies) are loaded into the core 3. An exposure of each of the fuel assemblies loaded into the core 3 which is the initial core is zero GWd/t before the start of operation of the Boiling Water Reactor having the core 3. In the Boiling Water Reactor 1 having the core 3 loaded with the 872 fuel assemblies 4, the 205 control rods 5 are used.

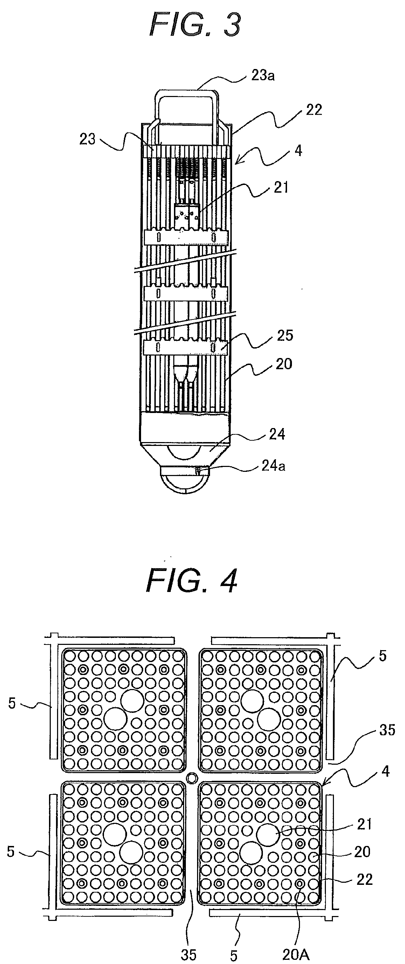

The fuel assemblies 4 loaded into the core 3 is described with reference to Fig. 3. Each of the fuel assemblies 4 has a plurality of fuel rods 20, an upper tie plate 23, a lower tie plate 24 and a channel box 22. A plurality of cylindrical-shaped fuel pellets made using nuclear fuel materials including fission materials (uranium-235) are charged into the fuel rod 20. The bottom ends of the respective fuel rods 20 are supported by the lower tie plate 24, while the top ends of the nuclear fuel rods 20 are supported by the upper tie plate 23 provided with a handle 23a. The fuel rods 20 are bundled together with a plurality of fuel spacers 25 to be arranged in a square grid shape (see Fig. 4) so as to maintain predetermined intervals between the fuel rods. The plurality of fuel spaces 25 are arranged in the axial direction of the fuel assembly 4. As shown in Fig. 4, partial length fuel rods 20A are placed in a layer adjacent to and inside the outermost layer of the array of fuel rods 20. Two water rods 21 are placed adjacent to each other in a central portion of the fuel assembly 4 when viewed in cross section, and the water rods 21 are surrounded with the individual fuel rods 20 (see Fig. 4). The water rods 21 also have bottom ends supported by the lower tie plate 24 and top ends held by the upper tie plate. The plurality of fuel rods 20 and the water rods 21 bundles by the plurality of fuel spacers 25 are placed within the channel box 22 having a top end attached to the upper tie plate 23 and extending toward the lower tie plate 24. A part of the fuel rods 20 in the fuel assembly 4 includes the fuel pellets containing burnable poison. A neutron detector is placed in the core 3.

As shown in Fig. 5, the top ends of the four fuel assemblies 4 are inserted into squares formed in an upper grid plate 27, and also pressed against the upper grid plate 27 to be held by channel fasteners 26 which are attached to the top ends of the channel boxes 22 of the respective fuel assemblies 4. The four fuel assemblies 4 are placed adjacent to a control rod 5 to surround the control rod 5, and a single cell consists of the control rod 5 and the four fuel assemblies 4 arranged next to the control rod. The core 3 includes a plurality of the cells.

The fuel assemblies 4 are classified into types according to a loading ratio of the fission materials. The initial core includes four types of fuels: highly enriched fuel containing an average of 3.8wt% of fissionable uranium-235 with reference to the fuel assembly; medium enriched fuel A containing an average of 2.5wt%; medium enriched fuel B containing an average of 1.8wt%; and low enriched fuel using only natural uranium (0.71wt%). The above fuels are loaded into the core as shown in Fig. 1. The center of a location where the four low enriched fuel assemblies are collectively placed in the core corresponds to a region where the control rod is operated during operation, the control rod being used to adjust the power of the nuclear reactor.

Fig. 10 is a horizontal section through a quarter core illustrating the outermost core region, the peripheral core region and the inner core region in the embodiment. The number of fuel assemblies in the peripheral core region is 41. There are 22 fuel assemblies of the medium enriched fuel A, 2 fuel assemblies of the medium enriched fuel B and 17 fuel assemblies of the low enriched fuel in the peripheral core region of the initial core shown in Fig. 1. The proportion of the medium enriched fuel in the peripheral core region is about 59%.

In the embodiment, the medium enriched fuel of a high multiplication factor is loaded into the peripheral portion of the core. As a result, the power in the peripheral portion is increased in the beginnings of the core operation to flatten the power distribution, and, also, because the power in the peripheral portion of the core reaches its peak in the beginnings of the operation, the power in the central portion of the core reaches its peak in the end stage of the operation, thus prolonging the operation period of the core to improve the economical efficiency.

As described above, in the embodiment, in an initial core of a Boiling Water Reactor loaded with at least three types of fuel including highly enriched fuel with a fission-material content of 3.0wt% or more, medium enriched fuel with a fission-material content of a range from 1.5wt% or more to less than 3.0wt%, and low enriched fuel with a fission-material content of less than 1.5wt%, when a region of an outermost peripheral of the core occupied by the fuels each having no face adjoining another fuel in a horizontal direction, is defined as an outermost peripheral region, a region outside a line at 80% of a radius of a circumcircle of the core and except for the outermost peripheral region is defined as a peripheral region and the remainder is defined as an inner region, 50% or more of the fuel loaded in the peripheral region is medium enriched fuel.

In the initial core loaded with three types of more of fuel, the infinite neutron multiplication factor reaches maximum because the medium enriched fuel typically has a low content of burnable poison. For this reason, instead of being placed in the outermost peripheral of the core where the leakage of neutrons increases in amount, the medium enriched fuel is loaded in the peripheral position of the core in order to increase the power in the peripheral portion. As a result, the power of the core is fattened to increase the thermal margin, improving the economical efficiency.

### Embodiment 2

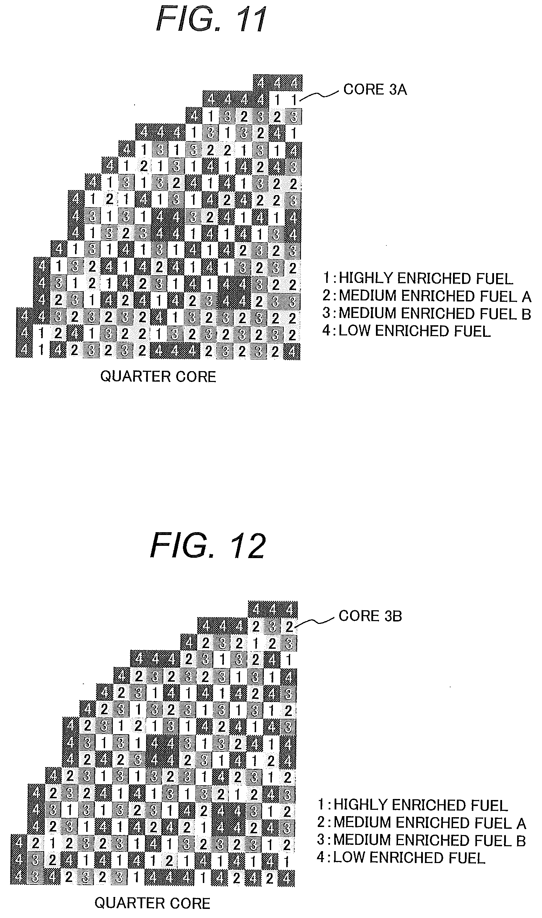

An initial core of a nuclear reactor according to Embodiment 2 which is another embodiment of the present invention will be described with reference to Fig. 11. A core 3A which is an initial core according to the embodiment has configuration in which fuel assemblies of the enrichments are arranged as shown in Fig. 11 in the core 3 according to Embodiment 1. The core 3A is identical in other configuration with the core 3.

About the number of highly enriched fuels adjacent to the low enriched fuel in the inner core region in the embodiment, six low enriched fuel assemblies are adjacent to none of highly enriched fuel assembly, seven low enriched fuel assemblies are adjacent to a highly enriched fuel assembly, eleven low enriched fuel assemblies are adjacent to two highly enriched fuel assemblies, twelve low enriched fuel assemblies are adjacent to three highly enriched fuel assemblies and three low enriched fuel assemblies are adjacent to four highly enriched fuel assemblies. On average, the number of neighbors is about 2.0. Further, about the low enriched fuel adjacent to the highly enriched fuel in the inner core region, three high enriched fuel assemblies are adjacent to a low enriched fuel assembly, eleven high enriched fuel assemblies are adjacent to two low enriched fuel assemblies, ten highly enriched fuel assemblies are adjacent to three low enriched fuel assemblies, and six high enriched fuel assemblies are adjacent to four low enriched fuel assemblies. On average, the number of neighbors is about 2.6.

In the embodiment, since the highly enriched fuel in which the multiplication factor reaches maximum in the end stage of operation is placed adjacent to the low enriched fuel, the exposure of the low enriched fuel is increased. Further, the peaking in the highly enriched fuel in the end stage of operation is reduced, improving the economical efficiency by flattened power.

Further, in the embodiment, in an initial core of a Boiling Water Reactor loaded with at least three types of fuel including highly enriched fuel with a fission-material content of 3.0wt% or more, medium enriched fuel with a fission-material content of a range from 1.5wt% or more to less than 3.0wt%, and low enriched fuel with a fission-material content of less than 1.5wt%, when a region of an outermost peripheral of the core occupied by the fuel having no face adjoining another fuel in a horizontal direction is defined as an outermost region, a region outside a line at 80% of a radius of a circumcircle of the core and except for the outermost peripheral region is defined as a peripheral region and the remainder is defined as an inner region, and when four faces of a fuel assembly adjacent to other fuel are defied as adjacent faces, the number of adjacent faces of the highly enriched fuel adjoining the low enriched fuel in the inner region averages 1.5 or more, and the number of adjacent faces of low enriched fuel adjacent to highly enriched fuel averages 1.5 or more.

A higher ratio of unloading exposure to enrichment and a reduction in the number of reloaded fuel assemblies as much as possible are required for an improvement in economical efficiency of the initial core. However, since the low enriched fuel is hardly burned, the highly enriched fuel is placed next to the low enriched fuel so that neutrons flow into the low enriched fuel in order to force the fuel to be burned. Also, for inhibiting a rise in power in the highly enriched fuel after burnout of burnable poison in the end stage of operation, the low enriched fuel is placed next to the highly enriched fuel to flatten the power distribution, improving the economical efficiency.

### Embodiment 3

An initial core of a nuclear reactor according to Embodiment 3 which is another embodiment of the present invention will be described with reference to Fig. 12. A core 3B which is an initial core according to the embodiment has configuration in which fuel assemblies of the enrichments are arranged as shown in Fig. 12 in the core 3 according to Embodiment 1. The core 3B is identical in other configuration with the core 3.

The 8 fuel assemblies of highly enriched fuel, 17 fuel assemblies of medium enriched fuel A, 15 fuel assemblies of medium enriched fuel B and 1 fuel assembly of low enriched fuel are placed in the peripheral core region in the embodiment, and the proportion of the medium enriched fuel in the peripheral core region is about 78%.

About the number of highly enriched fuel adjacent to the low enriched fuel in the inner core region in the embodiment, seven low enriched fuel assemblies are adjacent to none of highly enriched fuel assembly, six low enriched fuel assemblies are adjacent to a highly enriched fuel assembly, 21 low enriched fuel assemblies are adjacent to two highly enriched fuel assemblies, 10 low enriched fuel assemblies are adjacent to four highly enriched fuel assemblies and one low enriched fuel assembly is adjacent to four highly enriched fuel assemblies. On average, the number of neighbors is about 1.8. Further, about the low enriched fuel adjacent to the highly enriched fuel in the inner core region, 12 highly enriched fuel assemblies are adjacent to one low enriched fuel assembly, 20 highly enriched fuel assemblies are adjacent to two low enriched fuel assemblies, and 8 highly enriched fuel assemblies are adjacent to three low enriched fuel assemblies. On average, the number of neighbors is about 1.9.

In the embodiment, in addition to the advantageous effects of Embodiments 1 and 2, all the types of fuel are placed approximately evenly in the core in order to facilitate a reduction in mismatch effects of each fuel output power, improving thermal margin for improved core economical efficiency.

### Embodiment 4

An initial core of a nuclear reactor according to Embodiment 4 which is another embodiment of the present invention will be described. The initial core according to the embodiment has similar configuration to the core 3B of Embodiment 3, but a difference is that an average enrichment of the highly enriched fuel is 3.4wt%. Other configuration of the core 3B is identical with Embodiment 3.

In the embodiment, the reducing of enrichment to be lower than an average enrichment of 3.8wt% of the reloaded fuel can reduce the mass of the fission materials loaded into the initial core, resulting in an improvement in economical efficiency of the initial core.

### Reference Signs List

- 1: Boiling Water Reactor,
- 2: Reactor pressure vessel,
- 3, 3A, 3B: Core,
- 4: Fuel assembly,
- 5: Control rod,
- 7: Core shroud,
- 8: Core support plate,
- 9, 9a, 9b: Fuel support fittings,
- 13: Internal pump,
- 15: Control-rod guide tube,
- 16: Control-rod drive mechanism,
- 20: Control rod,
- 22: Channel box,
- 27: Upper grid plate

## Claims

1. A nuclear reactor core, wherein, in an initial core of a boiling water reactor loaded with at least three types of fuel including highly enriched fuel with a fission-material content of 3.0wt% or more, medium enriched fuel with a fission-material content of a range from 1.5wt% or more to less than 3.0wt%, and low enriched fuel with a fission-material content of less than 1.5wt%,
when a region of an outermost peripheral of a core occupied by the fuel having no face adjoining another fuel in a horizontal direction is defined as an outermost peripheral region, a region outside a line at 80% of a radius of a circumcircle of the core and except for the outermost peripheral region is defined as a peripheral region and the remainder is defined as an inner region, 50% or more of the fuel loaded in the peripheral region is the medium enriched fuel.

2. A nuclear reactor core, wherein, in an initial core of a boiling water reactor loaded with at least three types of fuel including highly enriched fuel with a fission-material content of 3.0wt% or more, medium enriched fuel with a fission-material content of a range from 1.5wt% or more to less than 3.0wt%, and low enriched fuel with a fission-material content of less than 1.5wt%,
when a region of an outermost peripheral of the core occupied by the fuel having no face adjoining another fuel in a horizontal direction is defined as an outermost peripheral region, a region outside a line at 80% of a radius of a circumcircle of the core and except for the outermost peripheral region is defined as a peripheral region and the remainder is defined as an inner region, and when four faces of a fuel assembly adjacent to other fuel are defied as adjacent faces, the number of adjacent faces of the highly enriched fuel adjoining the low enriched fuel in the inner region averages 1.5 or more, and the number of adjacent faces of the low enriched fuel adjacent to the highly enriched fuel averages 1.5 or more.

3. The nuclear reactor core according to claim 1, wherein the number of adjacent faces of the highly enriched fuel adjacent to the low enriched fuel in the inner region averages 1.5 or more, and the number of adjacent faces of the low enriched fuel adjacent to the highly enriched fuel averages 1.5 or more.

4. The nuclear reactor core according to any one of claims 1 to 3, wherein the highly enriched fuel contains a smaller proportion of fission material than reloaded fuel.
